(19)

**Europäisches Patentamt**
**European Patent Office**
**Office européen des brevets**

(11) **EP 1 690 881 B1**

(12) **EUROPEAN PATENT SPECIFICATION**

(45) Date of publication and mention
of the grant of the patent:
**06.08.2008 Bulletin 2008/32**

(51) Int Cl.:
***C08G 63/86*** (2006.01)      ***D01F 6/62*** (2006.01)
***C08G 63/183*** (2006.01)

(21) Application number: **04819980.6**

(22) Date of filing: **03.12.2004**

(86) International application number:
**PCT/JP2004/018444**

(87) International publication number:
**WO 2005/054334 (16.06.2005 Gazette 2005/24)**

(54) **POLYESTER, PROCESS FOR PRODUCING THE SAME, FIBER, AND POLYMERIZATION CATALYST FOR POLYESTER**

POLYESTER, HERSTELLUNGSVERFAHREN DAFÜR, FASER UND POLYMERISATIONSKATALYSATOR FÜR POLYESTER

POLYESTER ET SON PROCEDE DE PRODUCTION, FIBRE ET CATALYSEUR DE POLYMERISATION DE POLYESTER

(84) Designated Contracting States:
**DE FR GB**

(30) Priority: **04.12.2003 JP 2003405536**

(43) Date of publication of application:
**16.08.2006 Bulletin 2006/33**

(73) Proprietor: **Teijin Fibers Limited**
**Osaka-shi, Osaka 541-0054 (JP)**

(72) Inventor: **TAKASE, Toru,**
**Teijin Fibers Limited**
**Matsuyama-shi,**
**Ehime 791-8041 (JP)**

(74) Representative: **Hallybone, Huw George et al**
**Carpmaels & Ransford**
**43-45 Bloomsbury Square**
**London WC1A 2RA (GB)**

(56) References cited:
**EP-A- 0 745 629**          **EP-A1- 1 188 848**
**GB-A- 879 265**            **GB-A- 1 236 949**
**GB-A- 1 252 106**          **JP-A- 8 319 347**
**US-A1- 2003 144 459**

• **DATABASE WPI Week 200361 Derwent Publications Ltd., London, GB; AN 2003-638971 XP002445706 -& JP 2003 003324 A (TOYOBO KK) 8 January 2003 (2003-01-08)**
• **DATABASE WPI Week 198138 Derwent Publications Ltd., London, GB; AN 1981-68843D XP002445707 -& JP 56 096913 A (TEIJIN LTD) 5 August 1981 (1981-08-05)**
• **DATABASE WPI Week 199148 Derwent Publications Ltd., London, GB; AN 1991-350062 XP002445708 -& JP 03 234810 A (TORAY IND INC) 18 October 1991 (1991-10-18)**

EP 1 690 881 B1

**Description**

Field of the Invention

The present invention relates to a polyester having improved fiber formability. More specifically, the present invention relates to a polyester produced by using an antimony catalyst of specific composition and a production method thereof. The polyester has a controlled crystallization rate, undergoes few fiber breakages during high-speed spinning and has excellent stretchability and twistability and good color. Further, the present invention also relates to fibers comprising the polyester. The present invention also relates to a catalyst for polymerization of the polyester.

Description of the Related Art

A polyester typified by a polyethylene terephthalate is a material having high strength, a high Young's modulus and excellent thermal dimensional stability. Fibers formed from the polyester are used in a wide variety of applications such as clothing and industrial materials. In addition, recently, use of high-speed spinning has simplified conventionally required stretching and heat treatment steps into one step, making it possible to decrease costs. Thus, significance thereof has been further increasing.

However, when high-speed spinning is carried out, the polyester has the following problem in spite of the above excellent properties. That is, the polyester has a quality-related problem that crystallization of the polyester at the time of stretching and processing fibers must be controlled in producing the polyester fibers and an increase in spinning speed makes orientation and crystallization remarkable, resulting in significant deterioration in the shrinkage of the fibers. Further, it also has a problem that the number of fiber breakages during high-speed spinning is liable to increase. The problem of fiber breakages is particularly important, because a production step using high-speed spinning is subjected to a greater influence of the fiber breakages than a conventional production step using low-speed spinning. That is, fiber breakages are liable to spread to adjacent fibers, and it takes a large amount of time to recover a weight having undergone a fiber breakage by resetting a fiber on the weight, thereby making deterioration in productivity due to the fiber breakages significant.

Therefore, in high-speed spinning, it is essential that the frequency of occurrence of fiber breakages be less than before, so as to secure operation stability.

To solve the problem, a variety of proposals have been made on improvements to spinning conditions such as a spinning temperature and cooling conditions and the structures of a spinneret and a heating pipe under the spinneret. However, these measures have limitations and cannot decrease the number of fiber breakages significantly.

Further, attempts to solve the problem by modification of the polyester have also been made. For example, production of polyester having controlled molecular weight distribution has been attempted by paying attention to a Z average molecular weight, a weight average molecular weight and a number average molecular weight (refer to Patent Publication 1). However, at the time of spinning, the molecular weight distribution is shifted to an equilibrium state due to an ester redistribution reaction. That is, control of the redistribution reaction by a terminal blocking agent or the like is required for making molecular weight distribution after fiber production monodisperse. This is difficult from an industrial standpoint.

Further, a technique for controlling orientation of the polyester by adding a vinyl polymer which contains a modifying component having a low molecular weight such as 1,200 or 3,000 to the polyester to allow the vinyl polymer to react with the polyester so as to form "molecular crosslinking" is disclosed (refer to Patent Publication 2). The technique is a technique using the low-molecular-weight vinyl polymer as a molecular polyvalent crosslinking agent. However, the technique has a problem that since ester forming reactive groups existing in side chains of the vinyl polymer have an excessively short distance between the reactive groups (distance between branch points), the polymer is liable to produce gel in a polymerization reactor or spinning machine and forms foreign matter, thereby degrading fiber formability.

Meanwhile, as means for controlling orientation and crystallization of the polyester, a method comprising adding a polyether (polyalkylene glycol) or isophthalic acid to the polyester and copolymerizing them is also known (Refer to Patent Publications 3 and 4). That is, a technique comprising adding the low-molecular-weight polyether to the polyester, copolymerizing them and performing melt-spinning at a high take-up speed is disclosed. The technique described in the publication has a problem that although "crystallization" of polyester fibers melt-spun at a take-up speed of 2,000 m/min or higher is controlled, the strength of the fibers lowers.

Meanwhile, polyesters containing at least one sodium compound selected from the group consisting of sodium hydroxide, sodium carbonate, sodium benzoate and sodium stearate and polyesters containing trimellitic acid and a Ca salt and/or Ba salt of trimellitic acid are proposed. These polyesters are effective for control of fiber breakages to a certain extent (refer to Patent Publications 5 and 6). However, these polyesters have limitations on improvement of the melt extrudability of the polymers to improve a spinning speed and a production capacity. That is, when a spinning temperature is increased to improve the melt extrusion capability of the polymers, alkalinolysis may occur due to an alkali metal salt or alkaline earth metal salt or pack blocking may occur due to agglomeration of fine particles, thereby limiting continuous running time.

As described above, it is a current situation that prevention of fiber breakages in high-speed spinning is not achieved yet by modification of the polymer by the prior art.

(Patent Publication 1) JP-A 2001-89935 (the term "JP-A" as used herein means an "unexamined published Japanese patent application")

(Patent Publication 2) JP-A 11-61568

(Patent Publication 3) JP-A 11-240944

(Patent Publication 4) JP-A 2001-271226

(Patent Publication 5) JP-A 11-279836

(Patent Publication 6) JP-A 11-247024

SUMMARY OF THE INVENTION

(Problems to be solved by the Invention)

A first object of the present invention is to provide a polyester with a controlled crystallization rate which forms fibers stably even in high-speed spinning and a production method thereof. A second object of the present invention is to provide fibers comprising the polyester and having a controlled crystallization rate. A third object of the present invention is to provide a catalyst for polymerization of the polyester.

(Means for solving the Problems)

The present inventors have made intensive studies to solve the above problems. As a result, they have found that when a specific antimony catalyst is used, a polyester which has an improved crystallization rate, can endure high-speed spinning over a long time and has good color can be obtained. The present invention has been completed by this finding.

That is, the present invention is a polyester obtainable in the presence of an antimony catalyst, wherein the antimony catalyst comprises:

(i) diantimony trioxide, and
(ii) 1 to 10 wt% of diantimony tetraoxide and/or diantimony pentaoxide based on diantimony trioxide.

Further, the present invention is fibers obtained by melt-spinning the above polyester.

Further, the present invention is a method for producing a polyester by subjecting a dicarboxylic acid or an ester forming derivative thereof and a diol or an ester forming derivative thereof to an esterification reaction or a transesterification reaction and then carrying out a polycondensation reaction in the presence of an antimony catalyst, wherein the antimony catalyst comprises:

(i) diantimony trioxide, and
(ii) 1 to 10 wt% of diantimony tetraoxide and/or diantimony pentaoxide based on diantimony trioxide.

Further, the present invention is a catalyst for polymerization of polyester, the catalyst comprising:

(i) diantimony trioxide, and
(ii) 1 to 10 wt% of diantimony tetraoxide and/or diantimony pentaoxide based on diantimony trioxide.

Effects of the invention

According to the present invention, a polyester having a controlled crystallization rate, a reduced number of fiber breakages during spinning, excellent stretchability and twistability and good color and fibers of the polyester can be obtained.

Best Mode for the Embodiments of the Invention (Polyester)

The polyester of the present invention is a linear saturated polyester having recurring units comprising a dicarboxylic acid or an ester forming derivative thereof and a diol or an ester forming derivative thereof.

Illustrative of the dicarboxylic acid or ester forming derivative thereof include terephthalic acid, isophthalic acid, 2,6-naphthalenedicarboxylic acid, 2,7-naphthalenedicarboxylic acid, 1,4-cyclohexyldicarboxylic acid, P-hydroxybenzoic acid, dimethyl terephthalate, dimethyl isophthalate, dimethyl 2,6-naphthalenedicarboxylate, dimethyl 2,7-naphthalenedicarboxylate, dimethyl 1,4-cyclohexyldicarboxylate, and diphenyl esters and acid halides of other dicarboxylic acids. Terephthalic acid, 2,6-naphthalenedicarboxylic acid and their ester forming derivatives are preferred. The amount of these main dicarboxylic acid components is preferably 70 mol% or higher, more preferably 80 mol% or higher, much more preferably 90 mol% or higher, based on all dicarboxylic acid components.

Illustrative examples of the diol or ester forming derivative thereof include ethylene glycol, 1,3-propanediol, 1,2-propanediol, 1,4-butanediol, diethylene glycol, 1,6-hexanediol and 1,4-cyclohexane dimethanol. Ethylene glycol and 1,4-butanediol are preferred. The amount of these main diol components is preferably 70 mol% or higher, more preferably 80 mol% or higher, much more preferably 90 mol% or higher, based on all diol components.

More preferred is a polyethylene terephthalate comprising, as a main constituent, an ethylene terephthalate unit using terephthalic acid or an ester forming derivative thereof as the dicarboxylic component and ethylene glycol as the diol component. The main constituent constitutes 60 mol% of all recurring units. The amount of the ethylene terephthalate unit is preferably 70 mol% or higher, more preferably 80 mol% or higher, much more preferably 90 mol% or higher, based on all recurring units.

Further, the polyester of the present invention may be copolymerized with other components in amounts that do not impair the physical properties of the polyester as a general-purpose resin. Illustrative examples of the components copolymerizable with the polyester include dicarboxylic acids or ester forming derivatives thereof and diols or ester forming derivatives thereof other than those mentioned above.

Illustrative examples of dicarboxylic acid components copolymerizable with the polyester of the present invention include terephthalic acid, 2,6-naphthalenedicarboxylic acid, isophthalic acid, 1,4-cyclohexyldicarboxylic acid, adipic acid, sebacic acid, phthalic acid, phthalic anhydride, 5-sodium sulfoisophthalate, 5-tetrabutyl phosphonium sulfoisophthalate, P-hydroxybenzoic acid, dimethyl terephthalate, dimethyl 2,6-naphthalenedicarboxylate, dimethyl isophthalate, dimethyl 1,4-cyclohexyldicarboxylate, dimethyl adipate, dimethyl sebacate, dimethyl phthalate, dimethyl 5-sodium sulfoisophthalate, and dimethyl 5-tetrabutyl phosphonium sulfoisophthalate. Particularly preferred are terephthalic acid, 2,6-naphthalenedicarboxylic acid, dimethyl terephthalate and dimethyl 2,6-naphthalenedicarboxylate. The amount of the copolymerizable dicarboxylic acid component is preferably 30 mol% or lower, more preferably 20 mol% or lower, much more preferably 10 mol% or lower, based on all dicarboxylic acid components.

Further, illustrative examples of diol components copolymerizable with the polyester of the present invention include ethylene glycol, 1,4-butanediol, diethylene glycol, propylene glycol, 2,2-dimethyl-1,3-propanediol, dipropylene glycol, 1,6-hexanediol, 1,4-hexane dimethanol, dimethylol propionate, a poly(ethylene oxide)glycol and a poly(tetramethylene oxide)glycol. The amount of the copolymerizable diol component is preferably 30 mol% or lower, more preferably 20 mol% or lower, much more preferably 10 mol% or lower, based on all diol components.

These dicarboxylic acids or ester forming derivatives thereof and diols or ester forming derivatives thereof may be used alone or in combination of two or more.

Further, the polyester of the present invention may be copolymerized with a polycarboxylic acid such as trimellitic acid, trimesic acid, trimellitic anhydride, pyromellitic acid or monopotassium trimellitate or a polyhydroxy compound such as glycerine, sodium dimethylol ethyl sulfonate or potassium dimethylol propionate in such an amount that does not impair the object of the present invention.

The polyester of the present invention preferably comprises a polyethylene terephthalate as a main constituent and satisfies (A) to (D) simultaneously. As the (A), the amount of copolymerized diethylene glycol is preferably 0.6 to 1.4 wt% based on the total weight of the polyester. When the amount of diethylene glycol copolymerized is too small, viscosity at the time of melt-spinning becomes too high, resulting in poor spinnability at the time of high-speed spinning. When the amount of diethylene glycol copolymerized is too large, heat resistance becomes poor, so that sublimed foreign matter is liable to be produced in a spinneret. To have the amount of diethylene glycol copolymerized within a given range, the following methods can be used, for example. For instance, to increase the copolymerized amount, a method of adding diethylene glycol in a required amount may be employed. Meanwhile, to decrease the copolymerized amount, there can be employed a method of reducing the amount of by-produced diethylene glycol by making smaller the molar ratio between the diol or ester forming derivative thereof and the dicarboxylic acid or ester forming derivative thereof as raw materials, a method of decreasing pre-reaction heating retention time under reduced pressure in the polycondensation reaction or a method of reducing the polycondensation reaction temperature.

As the (B), the cooling crystallization temperature (Tcd) of the polyester of the present invention is preferably 180 to 205°C, more preferably 185 to 200°C. When Tcd is too high, crystallization starts right underneath the spinneret immediately after spinning, and the fiber structure is fixed, thereby causing poor stretchability and processability. When Tcd is too low, crystallization starts after orientation of the polyester proceeds after spinning, orientation crystallization becomes dominant, so that a spinning condition may deteriorate or stretchability and processability may become poor.

As the (C), the difference between the heating crystallization temperature (Tci) and cooling crystallization temperature (Tcd) of the polyester of the present invention, i.e., Tcd - Tci, is preferably 5 to 30°C, more preferably 15 to 25°C. When Tcd - Tci is large, crystallization in fiber production proceeds excessively, so that stretchability deteriorates and fiber breakages during spinning and/or stretching, lapping, non-uniform stretching and the like are liable to occur. When Tcd - Tci is small, the spun polyester does not crystallize easily and the fiber structure is not formed, resulting in insufficient fiber strength.

A polyester having Tcd and Tcd - Tci within the above ranges can be produced by using the antimony catalyst of the present invention and controlling the amount of diethylene glycol copolymerized to 0.6 to 1.4 wt% based on the total weight of the polyester as described above.

As the (D), the half-time of crystallization $\tau$ at 200°C of the polyester of the present invention is preferably 60 to 90 seconds, more preferably 65 to 80 seconds. When $\tau$ is too short, the crystallization rate is so high that the fiber structure is fixed rapidly. Hence, sufficient relaxation time cannot be secured, stretchability becomes poor, and fiber breakages during spinning and/or stretching, stretch lapping or non-uniform stretching is liable to occur. Meanwhile, when $\tau$ is too long, crystallization proceeds too slowly, a crystal structure is not formed, resulting in poor fiber strength. A polyester having semicrystallization time within the above range can be produced by using the antimony catalyst of the present invention and controlling the amount of diethylene glycol copolymerized to 0. 6 to 1.4 wt% based on the total weight of the polyester as described above.

The content of an antimony compound in the polyester of the present invention is preferably 0.01 to 0.1 wt%, more preferably 0.02 to 0.08 wt%.

The polyester of the present invention may contain additives which are generally used in producing a polyester, e.g., a metal compound catalyst containing a metal element such as lithium, sodium, calcium, magnesium, manganese, zinc, antimony, germanium or titanium, a phosphorus compound as a coloration inhibitor, and inert particles and an organic compound which are used for other modification of the polyester in such an amount that does not impair the object of the present invention.

(Antimony Catalyst)

The antimony catalyst of the present invention comprises:

(i) diantimony trioxide, and
(ii) 1 to 10 wt% of diantimony tetraoxide and/or diantimony pentaoxide based on diantimony trioxide.

When the content of diantimony tetraoxide and/or diantimony pentaoxide is lower than 1 wt% based on diantimony trioxide, the catalyst shows a poor crystallinity controlling effect, while when the content is higher than 10 wt%, the catalyst has insufficient catalytic activity, so that the polyester polycondensation reaction proceeds very slowly disadvantageously. The content of diantimony tetraoxide and/or diantimony pentaoxide is preferably 1 to 8 wt%, more preferably 1 to 5 wt%, based on diantimony trioxide.

Either or both of diantimony tetraoxide and diantimony pentaoxide may be contained. When both of them are contained, their ratio may vary within a given range.

The antimony catalyst of the present invention can be obtained by mixing diantimony tetraoxide and/or diantimony pentaoxide into diantimony trioxide as appropriate.

Why the crystallization rate of the polyester can be controlled by the antimony catalyst of the present invention is not quite known. However, according to the experiment conducted by the present inventor, the crystallization rate of the polyester could be controlled by the present antimony catalyst obtained by adding diantimony tetraoxide and/or diantimony pentaoxide to diantimony trioxide.

In the antimony catalyst of the present invention, (a) the content of a Pb (lead) element is preferably 1 to 100 ppm. The content of the Pb element is more preferably 1 to 80 ppm. When the content of the Pb element is high, the catalyst exhibits a poor crystallinity controlling effect and shows poor color. Reducing the content of the Pb element to lower than 1 ppm involves difficult crystallization (purification) and high costs and lacks industrial significance.

Further, in the antimony catalyst of the present invention, (b) the content of an As (arsenic) element is preferably 1 to 100 ppm. The content of the As element is more preferably 1 to 80 ppm. When the content of the As element is high, the catalyst exhibits a weak crystallinity controlling effect. Reducing the content of the As element to lower than 1 ppm involves difficult crystallization (purification) of antimony and high costs and lacks industrial significance.

Further, in the antimony catalyst of the present invention, (c) an Fe element is preferably substantially not contained. When the Fe element is contained, the color of the polyester deteriorates. "Substantially not contained" indicates being undetectable by a general analyzing technique at the time of application.

By reducing the contents of these metal elements which are impurities in the antimony catalyst to predetermined contents lower than conventional contents, the amount of a material which serves a crystal nucleus when the polyester crystallizes can be controlled. It is conceived that the crystallization rate of the polyester can be controlled as a result of that.

Accordingly, in diantimony trioxide constituting the antimony catalyst of the present invention, (a) the content of the Pb element is preferably 1 to 100 ppm, more preferably 1 to 80 ppm. Further, (b) the content of the As element is preferably 1 to 100 ppm, more preferably 1 to 80 ppm. In addition, (c) the Fe element is preferably substantially not contained.

Further, in diantimony tetraoxide and/or diantimony pentaoxide constituting the antimony catalyst of the present invention, (a) the content of the Pb element is preferably 1 to 100 ppm, more preferably 1 to 80 ppm. Further, (b) the content of the As element is preferably 1 to 100 ppm, more preferably 1 to 80 ppm. In addition, (c) the Fe element is preferably substantially not contained.

Antimonies having low contents of Pb, As and Fe can be produced by purifying diantimony trioxide, diantimony tetraoxide or diantimony pentaoxide by crystallization. The crystallization process comprises melting, oxidation and cooling steps. For example, in the case of diantimony trioxide, diantimony trioxide is molten, and the content of Pb in the molten liquid phase can be determined by the melting temperature. Further, by adjusting the quantity of air to be fed in an oxidation tank, Pb whose vapor pressure is higher than diantimony trioxide can be removed selectively. Then, by filtering the resulting product by use of a filter having predetermined openings when it is sent to a cooling tank, the contents of As and Fe can be controlled. Thereafter, by controlling the cooling rate and the cooling temperature, the amount of As taken into diantimony trioxide crystals can be controlled.

(Production Method of Polyester)

The polyester of the present invention can be produced by subjecting the above dicarboxylic acid or ester forming derivative thereof and the above diol or ester forming derivative thereof to an esterification reaction or a transesterification reaction and then carrying out a polycondensation reaction in the presence of the above antimony catalyst. In this case, copolymerizable components as described above may be used.

The polyester to be obtained is produced by using the antimony catalyst in an amount of preferably 0.01 to 0.1 wt%, more preferably 0.02 to 0.08 wt%, based on the weight of the polyester. When the amount of the antimony catalyst is small, the polycondensation reaction does not proceed to a sufficient extent at the time of production of the polyester, so that a polyester having satisfactory mechanical characteristics cannot be obtained. When the amount of the antimony catalyst is large, depolymerization proceeds during fiber production, and the intrinsic viscosity of the polyester lowers, whereby the strength and color of the polyester may deteriorate.

For example, first of all, a first-stage transesterification reaction or esterification reaction is conducted to produce a diol ester of terephthalic acid and/or a lower polymer thereof, in which a dicarboxylic acid and the diol are directly subjected to an esterification reaction, a lower alkyl ester of terephthalic acid such as dimethyl terephthalate and the diol are subjected to a transesterification reaction, or a terephthalic acid is reacted with an oxide. When the dicarboxylic acid and the diol are directly esterified, the polyester can be produced by charging slurry whose molar ratio between the diol and the dicarboxylic acid is adjusted to 1.1 to 2.0 into a reactor equipped with a stirring blade and a distilling column and distilling out a given amount of water at normal pressure or a gauge pressure of 0.3 MPa or lower at 230 to 270°C. When the dicarboxylic acid ester and the diol are transesterified, the transesterification reaction can be carried out in the presence of a transesterification catalyst at a molar ratio of diol/dicarboxylic acid ester of 1.4 to 2.0 at normal pressure or a gauge pressure of 0.3 MPa or lower with the temperature being increased from room temperature until a given amount of an alcohol is distilled out.

Then, the obtained product is fed into a polymerization reactor equipped with a stirring blade, a cooling device and vacuum equipment, and the polyester can be produced by a second-stage polycondensation reaction in which a polycondensation reaction is carried out until a desired polymerization degree is achieved with stirring torque or stirring power controlled by heating the temperature to 270 to 320°C while reducing the pressure from normal pressure to 200 Pa or lower. Further, the obtained polyester resin may be subjected to a solid-phase polymerization process and a vacuum reaction or nitrogen blowing at 200°C to a temperature lower than the melting point of the polyester resin as required to increase intrinsic viscosity.

The antimony catalyst used in the present invention is generally used as a polycondensation catalyst and preferably added in the following manner. That is, diantimony trioxide may be used in powdery form or may be dissolved or dispersed in glycols typified by ethylene glycol and then added. The catalyst may be added at any time before the start of the polycondensation reaction. It may be added in the initial or latter stage of the transesterification reaction or esterification reaction or immediately before the start of the polycondensation reaction.

(Fibers)

To form the obtained polyester into fibers, there is no need to employ a special method, and any known melt-spinning method of polyester fibers can be employed under any conditions. For example, any fiber production method such as a method comprising melt-spinning the polyester at a rate of 500 to 2,500 m/min and stretching and heat-treating the spun polyester, a method comprising melt-spinning the polyester at a rate of 1,500 to 5,000 m/min and carrying out stretching and tentative twisting simultaneously or successively or a method comprising melt-spinning the polyester at a high rate of not lower than 5,000 m/min and omitting a stretching step depending on applications is employed. A fiber to be spun by these methods may be a solid fiber free of a hollow portion or a hollow fiber having a hollow portion. Further, the external shape of the cross section of the polyester fiber to be spun and the shape of the hollow portion thereof may be circular or irregular. Further, the polyester fiber of the present invention can be preferably used as at least one component out of various polymers constituting a composite fiber.

The fiber of the present invention is particularly excellent in step conditions during high-speed spinning and stretchability and processability at the time of production thereof. As for the orientation crystallinity of produced fibers, the relationship between boiling water shrinkage (BWS) and birefringence (Δn) preferably satisfies the following formula (1):

$$3,000 \times \Delta n \leq BWS \leq 5,000 \times \Delta n \qquad (1)$$

When BWS is lower than 3,000 x Δn, it indicates that crystallinity has proceeded excessively, and fiber breakages during spinning, fiber breakages during stretching, lapping, non-uniform stretching and the like are liable to occur, thereby causing the occurrence of fuzz. Meanwhile, when BWS is higher than 5,000 x Δn, the fiber tends to have poor strength since the fiber structure is not formed. The upper limit of BWS may be around $4,000 \times \Delta n$ but is preferably 5,000 x Δn.

Fibers satisfying the above formula (1) can be produced by using the antimony catalyst of the present invention and using a polyester in which the amount of diethylene glycol copolymerized is 0.6 to 1.4 wt% based on the total weight of the polyester as described above.

Examples

Hereinafter, the present invention will be further described with reference to Examples. Properties in Examples and Comparative Examples were measured in the following manner.

(1) Determination of Quantities of Diantimony Tetraoxide and Diantimony Pentaoxide: The antimony-derived peak of powder was measured for each crystal form by an X-ray diffractometer of Rigaku Corporation.

(2) Determination of Quantities of Pb, As and Fe elements in Diantimony Trioxide, Diantimony Tetraoxide and Diantimony Pentaoxide: After concentrated sulfuric acid was added to a sample which was then dissolved under heating, the resulting solution was adjusted to a constant volume by pure water, and the quantities of metal components were determined by use of ICPS-8100 of Shimadzu Corporation in accordance with an ICP fluorescence analysis (high-frequency plasma fluorescence analysis) method.

(3) Intrinsic Viscosity ([η]): A sample was dissolved in a mixed solvent comprising 40 parts by weight of 1,1,2,2-tetrachlorethane and 60 parts by weight of phenol, and the intrinsic viscosity thereof was measured at 35°C in the conventional manner.

(4) Quantity of Diethylene Glycol (DEG) Copolymerized: A sample and hydrazine hydrate were charged into an eggplant-shaped flask equipped with a cooling pipe and then treated by a mantle heater for 2 hours. After completion of a decomposition reaction, the quantity of the obtained solution was determined by Shimadzu gas chromatograph GC-7G.

(5) Determination of Quantity of Antimony Compound in Polyester: A sample was measured for the quantity of an antimony element by use of the fluorescent X-ray model 3270 of Rigaku Corporation, and the measurement value was converted into the weight of diantimony trioxide and taken as the content of an antimony compound.

(6) Color: A sample was measured for L, a and b by use of the color meter ZE-2000 of Nippon Denshoku Industries Co., Ltd., and the color of the sample was evaluated by the b value.

(7) Temperature Increasing Crystallization Temperature Tci, Temperature Decreasing Crystallization Temperature Tcd: DSC-7 of PerkinElmer Japan Co., Ltd. was used. After 10 mg of sample was heated to 300° C at a rate of 20°C/min by DSC-7, it was quenched and then heated at a rate of 20°C/min again. The temperature of the peak top occurred was taken as Tci. After heated to 300° C, the sample was left to cool down. The temperature of the peak top of the crystallization peak occurring during temperature decreasing was taken as Tcd.

(8) Semi-crystallization Time τ: 1 g of sample was sandwiched between glass slides and kept on a hot plate at 285°C for 2 minutes. Then, the sample was quenched to obtain a circular sheet-like sample. The sample was charged into a silicone oil bath having a visible light source and kept at 200°C, the attenuation of visible light transmittance due to whitening by crystallization was recorded, and the half life was taken as τ.

(9) Boiling Water Shrinkage (BWS): A fiber sample was placed in boiling water for 2 minutes, and the shrinkage thereof was measured.
(10) Birefringence (Δn): A fiber sample was measured by use of ECLIPSE E400 POL deflection microscope of Nikon Corporation.

(Reference Example 1)

· Preparation of Diantimony Trioxide (A1)

Diantimony trioxide (Pb content: 300 ppm, As content: 300 ppm, Fe content: 5 ppm) of Nihon Mining & Concentrating Co., Ltd. was continuously molten at 700° C and fed to an oxidation tank, and hot air of the same temperature was fed into the tank at a rate of 2.4 $m^3$/ton-$Sb_2O_3$ to remove Pb. Then, after the resulting diantimony trioxide was filtered, it was cooled down to the melting point and crystallized in 12 hours, thereby preparing diantimony trioxide (A1) having metal element contents shown in Table 1.

(Reference Example 2)

· Preparation of Diantimony Trioxide (A2)

Diantimony trioxide (A2) having metal element contents shown in Table 1 was prepared in the same manner as in Reference Example 1 except that diantimony trioxide (Pb content: 300 ppm, As content: 300 ppm, Fe content: 300 ppm) of Mikuni Seiren Co., Ltd. was used and the feed rate of hot air was changed to 1.2 $m^3$/ton-$Sb_2O_3$ and the time for cooling down to the melting point and crystallization was changed to 6 hours to obtain metal element contents shown in Table 1.

(Reference Example 3)

· Preparation of Diantimony Trioxide (A3)

Diantimony trioxide (A3) having metal element contents shown in Table 1 was prepared in the same manner as in Reference Example 1 except that diantimony trioxide of Mikuni Seiren Co., Ltd. used in Reference Example 2 was molten at 640°C, hot air of the same temperature was fed at a rate of 0.2 $m^3$/ton-$Sb_2O_4$ and the resulting compound was cooled down and crystallized in 3 hours.

(Reference Example 4)

· Preparation of Diantimony Tetraoxide (B1)

Diantimony tetraoxide (Pb content: 500 ppm, As content: 500 ppm, Fe content: 10 ppm) of Mikuni Seiren Co., Ltd. was continuously molten at 750°C, hot air of the same temperature was fed at a rate of 2 $m^3$/ton-$Sb_2O_4$, and the resulting compound was cooled down and crystallized in 2 hours so as to prepare diantimony tetraoxide (B1) having metal element contents shown in Table 1.

(Reference Example 5)

· Preparation of Diantimony Tetraoxide (B2)

Diantimony tetraoxide (Pb content: 500 ppm, As content: 500 ppm, Fe content: 10 ppm) of Mikuni Seiren Co. , Ltd. was continuously molten at 720° C, hot air of the same temperature was fed at a rate of 1 $m^3$/ton-$Sb_2O_4$, and the resulting compound was cooled down and crystallized in 3 hours so as to prepare diantimony tetraoxide (B2) having metal element contents shown in Table 1.

(Reference Example 6)

· Preparation of Diantimony Pentaoxide (C1)

Diantimony pentaoxide (Pb content: 400 ppm, As content: 400 ppm, Fe content: 10 ppm) of Nissan Chemical Industries, Ltd. was continuously molten at 730°C, hot air of the same temperature was fed at a rate of 2 $m^3$/ton-$Sb_2O_5$, and the resulting compound was cooled down and crystallized in 2 hours so as to prepare diantimony pentaoxide (C1) having metal element contents shown in Table 1.

(Example 1)

· Preparation of Antimony Catalyst Solution:

Diantimony trioxide (A1) and diantimony tetraoxide (B1) were mixed together in the ratio shown in Table 2 to obtain a composition. The results of determination of the quantities of diantimony tetraoxide, Pb, As, and Fe in the composition are shown in Table 3. The obtained composition was dissolved in ethylene glycol to a concentration of 1.3 wt% at 130° C for 2 hours so as to prepare an antimony catalyst solution.

· Production of Polyester:

A transesterification reaction was carried out in the conventional manner by using 100 parts by weight of dimethyl terephthalate, 70 parts by weight of ethylene glycol and 0.5 parts by weight of diethylene glycol and using 0.038 parts by weight of manganese acetate tetrahydrate as a catalyst. After 0.025 parts by weight of trimethyl phosphate was added to the produced oligomer and the mixture was allowed to react for 15 minutes, 2.3 parts by weight of the above antimony catalyst solution was added. Further, ethylene glycol which contained titanium dioxide was also added such that the content of titanium dioxide was 0.3 wt% based on a titanium dioxide containing polyester. Then, the internal temperature was increased from 250° C to 290° C, and a polycondensation reaction was carried out under a reduced pressure of 0.133 kPa or lower for 3 hours so as to obtain a polyester having a [η] of 0.62 dL/g. The content of an antimony compound in the obtained polyester was 0.031 wt%. The measurement results of the properties of the polyester are shown in Table 4. · Production of Polyester Fibers:

The obtained polyester was discharged from a spinneret having 24 openings at 295°C and taken up directly at a spinning rate of 5,000 m/min. The polymer discharge rate was adjusted such that the total fiber fineness of the taken-up fibers was 150 dtex. Fiber production was conducted for 3 days, and the number of fiber breakages during spinning was counted. The intrinsic viscosity of this polyester fiber was 0.60 dL/g. The evaluation results of the polyester fibers are shown in Table 5.

(Examples 2 and 3 and Comparative Examples 1 and 2)

· Preparation of Antimony Catalyst Solution:

The procedure of Example 1 was repeated except that the composition of the antimony catalyst was changed as shown in Table 2. The results of determination of the quantities of diantimony tetraoxide, diantimony pentaoxide, Pb, As, and Fe in the catalyst compositions are shown in Table 3.

· Production of Polyester:

The procedure of Example 1 was repeated except that the amount of diethylene glycol (DEG) to be added was changed as appropriate such that the amount of diethylene glycol copolymerized became as shown in Table 4. The contents of antimony compounds in the polyesters obtained in Example 2 and Comparative Example 1 were 0.031 wt% as in Example 1. The contents of antimony compounds in Example 3 and Comparative Example 2 were 0.030 wt% and 0.032 wt%, respectively. The measurement results of the properties of the polyesters are shown in Table 4.

· Production of Polyester Fibers:

Polyester fibers were produced in the same manner as in Example 1. The results are shown in Table 5.

(Comparative Example 3)

· Preparation of Antimony Catalyst Solution:

The procedure of Example 1 was repeated except that the composition of the antimony catalyst was changed as shown in Table 2. The results of determination of the quantities of diantimony tetraoxide, Pb, As, and Fe in the catalyst composition are shown in Table 3.

· Production of Polyester:

The procedure of Example 1 was repeated except that diethylene glycol was not added. The content of an antimony compound in the obtained polyester was 0.031 wt% as in Example 1. The results are shown in Table 4.

· Production of Polyester Fibers:

Polyester fibers were produced in the same manner as in Example 1. The results are shown in Table 5.

(Example 4)

· Preparation of Antimony Catalyst Solution:

The procedure of Example 1 was repeated to prepare an antimony catalyst. The results of determination of the quantities of diantimony tetraoxide, Pb, As, and Fe in the catalyst composition are shown in Table 3.

· Production of Polyester:

The procedure of Example 1 was repeated except that the amount of diethylene glycol (DEG) to be added was changed such that the amount of DEG copolymerized became as shown in Table 4 and the antimony catalyst solution was added in an amount of 1.53 parts by weight. The content of an antimony compound in the obtained polyester was 0.020 wt%. The measurement results of the properties of the polyester are shown in Table 4.

· Production of Polyester Fibers:

Polyester fibers were produced in the same manner as in Example 1. The results are shown in Table 5.

(Example 5)

· Preparation of Antimony Catalyst Solution:

The procedure of Example 1 was repeated to prepare an antimony catalyst. The results of determination of the quantities of diantimony tetraoxide, Pb, As, and Fe in the catalyst composition are shown in Table 3.

· Production of Polyester:

The procedure of Example 1 was repeated except that the amount of diethylene glycol (DEG) to be added was changed such that the amount of DEG copolymerized became as shown in Table 4 and the antimony catalyst solution was added in an amount of 3.45 parts by weight. The content of an antimony compound in the obtained polyester was 0.046 wt%. The measurement results of the properties of the polyester are shown in Table 4.

· Production of Polyester Fibers:

Polyester fibers were produced in the same manner as in Example 1. The results are shown in Table 5.

(Example 6)

· Preparation of Antimony Catalyst Solution:

The procedure of Example 1 was repeated to prepare an antimony catalyst. The results of determination of the quantities of diantimony tetraoxide, Pb, As, and Fe in the catalyst composition are shown in Table 3.

· Production of Polyester:

The procedure of Example 1 was repeated except that the amount of diethylene glycol (DEG) to be added was changed such that the amount of DEG copolymerized became as shown in Table 4 and the antimony catalyst solution was added in an amount of 4.6 parts by weight. The content of an antimony compound in the obtained polyester was 0.061 wt%. The measurement results of the properties of the polyester are shown in Table 4.

· Production of Polyester Fibers:

Polyester fibers were produced in the same manner as in Example 1. The results are shown in Table 5.

(Examples 7, 8 and 9)

· Preparation of Antimony Catalyst Solution:

The procedure of Example 1 was repeated except that the composition of the antimony catalyst was changed as shown in Table 2. The results of determination of the quantities of diantimony tetraoxide, diantimony pentaoxide, Pb, As, and Fe in the catalyst compositions are shown in Table 3.

· Production of Polyester:

The procedure of Example 1 was repeated except that the amount of diethylene glycol (DEG) to be added was changed as appropriate such that the amount of diethylene glycol copolymerized became as shown in Table 4. The contents of antimony compounds in the obtained polyesters were 0.030 wt%. The measurement results of the properties of the polyesters are shown in Table 4.

· Production of Polyester Fibers:

Polyester fibers were produced in the same manner as in Example 1. The results are shown in Table 5.

(Example 10)

· Preparation of Antimony Catalyst Solution:

Diantimony trioxide (A1) and diantimony tetraoxide (B1) were mixed together in the ratio shown in Table 2 to obtain a composition. The results of determination of the quantities of diantimony tetraoxide, diantimony pentaoxide, Pb, As, and Fe in the composition are shown in Table 3. The obtained composition was dissolved in ethylene glycol to a concentration of 1.3 wt% at 130° C for 2 hours so as to prepare an antimony catalyst solution.

· Production of Polyester:

An esterification reaction was carried out in the conventional manner by using 85.5 parts by weight of terephthalic acid and 70 parts by weight of ethylene glycol in the absence of a catalyst under an increased pressure of 0. 3 MPa at 255° C. To the produced oligomer, 85.5 parts by weight of terephthalic acid and 70 parts by weight of ethylene glycol were further added, and an esterification reaction was carried out in the conventional manner under an increased pressure of 0.1 MPa at 255°C. A 1/2 volume of the produced oligomer was collected, and an esterification reaction was carried out in an esterification reaction tank in the conventional manner by use of 85.5 parts by weight of terephthalic acid and 70 parts by weight of ethylene glycol under an increased pressure of 0.1 MPa at 255° C. This operation was repeated five times. Then, after 0.025 parts by weight of trimethyl phosphate was added to a collected 1/2-volume oligomer and allowed to react for 15 minutes, 2.3 parts by weight of the above antimony catalyst solution was added. Further, ethylene glycol which contained titanium dioxide was added such that the content of titanium dioxide was 0.3 wt% based on a polyester containing titanium dioxide to be obtained. Then, the internal temperature was increased from 250° C to 290°C, and a polycondensation reaction was carried out under a reduced pressure of 0.133 kPa or lower for 3 hours so as to obtain a polyester having a [η] of 0.62 dL/g. The content of an antimony compound in the obtained polyester was 0.031 wt%. The measurement results of the properties of the polyester are shown in Table 4.

· Production of Polyester Fibers:

The obtained polyester was discharged from a spinneret having 24 openings at 295°C and taken up directly at a spinning rate of 5,000 m/min. The polymer discharge rate was adjusted such that the total fiber fineness of the taken-up fibers was 150 dtex. Fiber production was conducted for 3 days, and the number of fiber breakages during spinning was counted. The intrinsic viscosity of this polyester fiber was 0.59 dL/g. The evaluation results of the polyester fibers are shown in Table 5.

(Comparative Example 4)

· Production of Polyester:

An transesterification reaction was carried out in the conventional manner by using 100 parts by weight of dimethyl terephthalate, 70 parts by weight of ethylene glycol and 0.5 parts by weight of diethylene glycol and using 5.36 parts by weight of 1-wt% ethylene glycol solution of tetrabutyl titanium as a catalyst. 0.025 parts by weight of trimethyl phosphate was added to the produced oligomer and allowed to react for 15 minutes. Then, ethylene glycol which contained titanium dioxide was added such that the content of titanium dioxide was 0.3 wt% based on a polyester containing titanium dioxide. Thereafter, the internal temperature was increased from 250°C to 290°C, and a polycondensation reaction was carried out under a reduced pressure of 0.133 kPa or lower for 3 hours so as to obtain a polyester having a [η] of 0.64 dL/g. The content of an antimony compound in the obtained polyester was 0.0 wt%. The measurement results of the properties of the polyester are shown in Table 4.

· Production of Polyester Fibers:

The obtained polyester was discharged from a spinneret having 24 openings at 295°C and taken up directly at a spinning rate of 5,000 m/min. The polymer discharge rate was adjusted such that the total fiber fineness of the taken-up fibers was 150 dtex. Fiber production was conducted for 3 days, and the number of fiber breakages during spinning was counted. The intrinsic viscosity of this polyester fiber was 0.60 dL/g. The evaluation results of the polyester fibers are shown in Table 5.

Industrial Applicability

According to the present invention, there is provided a polyester whose crystallization rate is controlled during high-speed spinning. Since the polyester of the present invention is less liable to crystallize during high-speed spinning than conventional polyesters, subsequent stretching and twisting operations can be performed easily. Thus, productivity of twisted polyester fibers can be increased.

Table 1

|  | Type of Antimony | Symbol | Metal Element Content (weight ppm) | | |
|---|---|---|---|---|---|
|  |  |  | Pb | As | Fe |
| R.Ex.1 | Diantimony Trioxide | A1 | 20 | 20 | 0 |
| R.Ex.2 | Diantimony Trioxide | A2 | 150 | 100 | 40 |
| R.Ex.3 | Diantimony Trioxide | A3 | 200 | 200 | 100 |
| R.Ex.4 | Diantimony Tetraoxide | B1 | 30 | 20 | 0 |
| R.Ex.5 | Diantimony Tetraoxide | B2 | 70 | 80 | 5 |
| R.Ex.6 | Diantimony Pentaoxide | C1 | 60 | 60 | 0 |
| R.Ex.: Reference Example | | | | | |

Table 2

|  | Amount of Antimony Catalyst | | |
|---|---|---|---|
|  | Diantimony Trioxide | Diantimony Tetraoxide | Diantimony Pentaoxide |
|  | Type/Parts by Weight | Type/Parts by Weight | Type/Parts by Weight |
| Ex.1 | A1/100 | B1/1 | 0 |
| Ex.2 | A1/100 | 0 | C1/1 |
| Ex.3 | A1/100 | B1/1 | C1/1 |
| C.Ex.1 | A3/100 | 0 | 0 |

(continued)

| | Amount of Antimony Catalyst | | |
|---|---|---|---|
| | Diantimony Trioxide | Diantimony Tetraoxide | Diantimony Pentaoxide |
| | Type/Parts by Weight | Type/Parts by Weight | Type/Parts by Weight |
| C.Ex.2 | A1/100 | B2/30 | C1/30 |
| C.Ex.3 | A2/100 | B2/15 | 0 |
| Ex.4 | A1/100 | B1/1 | 0 |
| Ex.5 | A1/100 | B1/1 | 0 |
| Ex.6 | A1/100 | B1/1 | 0 |
| Ex.7 | A1/100 | B1/5 | 0 |
| Ex.8 | A1/100 | 0 | C1/5 |
| Ex.9 | A1/100 | B1/4 | C1/4 |
| Ex.10 | A1/100 | B1/1 | 0 |
| C.Ex.4 | - | - | - |
| Ex.: Example, C.Ex.: Comparative Example | | | |

Table 3

| | Composition of Antimony Catalyst | | | | | |
|---|---|---|---|---|---|---|
| | Diantimony Trioxide | Diantimony Tetraoxide | Diantimony Pentaoxide | Pb | As | Fe |
| | wt% | wt% | wt% | weight ppm | weight ppm | weight ppm |
| Ex.1 | 99.0 | 1.0 | 0 | 20 | 20 | 0 |
| Ex.2 | 99.0 | 0 | 1.0 | 21 | 20 | 0 |
| Ex.3 | 98.0 | 1.0 | 1.0 | 21 | 21 | 0 |
| C.Ex.1 | 100 | 0 | 0 | 200 | 200 | 100 |
| C.Ex.2 | 62.5 | 18.8 | 18.8 | 37 | 39 | 1 |
| C.Ex.3 | 87.0 | 13.0 | 0 | 140 | 97 | 35 |
| Ex.4 | 99.0 | 1 | 0 | 20 | 19 | 0 |
| Ex.5 | 99.0 | 1 | 0 | 19 | 20 | 0 |
| Ex.6 | 99.0 | 1 | 0 | 20 | 20 | 0 |
| Ex.7 | 99.0 | 1 | 0 | 20 | 20 | 0 |
| Ex.8 | 95.2 | 0 | 4.75 | 20 | 22 | 0 |
| Ex.9 | 92.6 | 3.7 | 3.7 | 22 | 21 | 0 |
| Ex.10 | 99.0 | 1.0 | 0 | 20 | 20 | 0 |
| C.Ex.4 | 0 | 0 | 0 | 0 | 0 | 0 |
| Ex.: Example, C.Ex.: Comparative Example | | | | | | |

Table 4

| | [η] | Amount of DEG Copolymerized | Col-b | Tci | Tcd | Tcd-Tci | τ |
|---|---|---|---|---|---|---|---|
| | Properties of Polyester | | | | | | |
| | dL/g | wt% | - | ° C | ° C | ° C | seconds |
| Ex.1 | 0.62 | 1.20 | 6.2 | 170 | 192 | 22 | 67 |
| Ex.2 | 0.62 | 1.18 | 6.2 | 168 | 188 | 20 | 70 |
| Ex.3 | 0.62 | 1.15 | 6.2 | 169 | 190 | 21 | 68 |
| C.Ex.1 | 0.62 | 1.15 | 8.5 | 155 | 206 | 51 | 15 |
| C.Ex.2 | 0.59 | 1.08 | 10.2 | 169 | 204 | 35 | 15 |
| C.Ex.3 | 0.62 | 0.45 | 8.0 | 156 | 205 | 49 | 17 |
| Ex.4 | 0.62 | 1.17 | 6.4 | 170 | 192 | 22 | 70 |
| Ex.5 | 0.63 | 1.14 | 5.9 | 168 | 192 | 24 | 66 |
| Ex.6 | 0.64 | 1.10 | 5.7 | 168 | 193 | 25 | 65 |
| Ex.7 | 0.62 | 1.16 | 6.5 | 165 | 194 | 29 | 64 |
| Ex.8 | 0.61 | 1.18 | 6.7 | 163 | 193 | 30 | 64 |
| Ex.9 | 0.62 | 1.20 | 6.9 | 164 | 195 | 31 | 62 |
| Ex. 10 | 0.63 | 1.20 | 6.8 | 170 | 194 | 24 | 71 |
| C.Ex.4 | 0.64 | 1.18 | 12.4 | 158 | 201 | 43 | 18 |
| Ex.: Example, C.Ex.: Comparative Example | | | | | | | |

Table 5

| | Number of Fiber Breakages | [η] dL/g | Δn - | BWS % |
|---|---|---|---|---|
| | Evaluation of Polyester Fibers | | | |
| Ex.1 | 0 | 0.60 | 0.012 | 53 |
| Ex.2 | 0 | 0.61 | 0.013 | 49 |
| Ex.3 | 0 | 0.61 | 0.011 | 48 |
| C.Ex.1 | 1 | 0.60 | 0.015 | 40 |
| C.Ex.2 | >10, Impossible to Spin | - | - | - |
| C.Ex.3 | 3 | 0.60 | 0.013 | 35 |
| Ex.4 | 0 | 0.60 | 0.012 | 53 |
| Ex.5 | 0 | 0.60 | 0.013 | 50 |
| Ex.6 | 0 | 0.61 | 0.012 | 49 |
| Ex.7 | 0 | 0.60 | 0.012 | 49 |
| Ex. 8 | 0 | 0.61 | 0.013 | 48 |
| Ex.9 | 1 | 0.61 | 0.013 | 47 |
| Ex.10 | 0 | 0.60 | 0.013 | 53 |
| C.Ex.4 | 2 | 0.58 | 0.020 | 35 |
| Ex.: Example, C.Ex.: Comparative Example | | | | |

**Claims**

1.  A polyester obtainable in the presence of an antimony catalyst, wherein the antimony catalyst comprises:

    (i) diantimony trioxide, and
    (ii) 1 to 10 wt% of diantimony tetraoxide and/or diantimony pentaoxide based on diantimony trioxide.

2.  The polyester of claim 1, wherein the content of an antimony compound is 0.01 to 0.1 wt%.

3.  The polyester of claim 1, comprising a polyethylene terephthalate as a main constituent and satisfying the following requirements:

    (A) the amount of copolymerized diethylene glycol is 0.6 to 1.4 wt% based on the total weight of the polyester,
    (B) the cooling crystallization temperature (Tcd) is 180°C to 205°C,
    (C) when the heating crystallization temperature is Tci, Tcd - Tci is 5°C to 30°C, and
    (D) the half-time of crystallization $\tau$ at 200°C is 60 to 90 seconds.

4.  The polyester of claim 1, wherein the antimony catalyst further satisfies the following requirements:

    (a) the content of a Pb element is 1 to 100 ppm,
    (b) the content of an As element is 1 to 100 ppm, and
    (c) an Fe element is substantially not contained.

5.  Fibers obtainable by melt-spinning the polyester of claim 1.

6.  The fibers of claim 5, wherein the relationship between boiling water shrinkage (BWS) and birefringence ($\Delta$n) satisfies the following formula (1):

$$3,000 \times \Delta n \le BWS \le 5,000 \times \Delta n \qquad (1)$$

7.  A method for producing a polyester by subjecting a dicarboxylic acid or an ester forming derivative thereof and a diol or an ester forming derivative thereof to an esterification reaction or a transesterification reaction and then carrying out a polycondensation reaction in the presence of an antimony catalyst, wherein the antimony catalyst comprises:

    (i) diantimony trioxide, and
    (ii) 1 to 10 wt% of diantimony tetraoxide and/or diantimony pentaoxide based on diantimony trioxide.

8.  The method of claim 7, wherein the polycondensation reaction is carried out in the presence of 0.01 to 0.1 wt% of the antimony catalyst based on the weight of the polyester to be obtained.

9.  The method of claim 7, wherein the antimony catalyst satisfies the following requirements:

    (a) the content of a Pb element is 1 to 100 ppm,
    (b) the content of an As element is 1 to 100 ppm, and
    (c) an Fe element is substantially not contained.

10. A catalyst for polymerization of polyester, comprising:

    (i) diantimony trioxide, and
    (ii) 1 to 10 wt% of diantimony tetraoxide and/or diantimony pentaoxide based on diantimony trioxide.

11. The catalyst of claim 10, further satisfying the following requirements:

    (a) the content of a Pb element is 1 to 100 ppm,
    (b) the content of an As element is 1 to 100 ppm, and

(c) an Fe element is substantially not contained.

**Patentansprüche**

1. Polyester, erhältlich in Gegenwart eines Antimonkatalysators, wobei der Antimonkatalysator:

   (i) Diantimontrioxid und
   (ii) 1 bis 10 Gew.-% Diantimontetraoxid und/oder Diantimonpentaoxid, bezogen auf Diantimontrioxid, umfaßt.

2. Polyester nach Anspruch 1, wobei der Gehalt einer Antimonverbindung 0,01 bis 0,1 Gew.-% beträgt.

3. Polyester nach Anspruch 1, umfassend ein Polyethylenterephthalat als ein Hauptbestandteil und welcher den folgenden Anforderungen genügt:

   (A) die Menge an copolymerisiertem Diethylenglycol beträgt 0,6 bis 1,4 Gew.-%, bezogen auf das Gesamtgewicht des Polyesters,
   (B) die Kühlungskristallisationstemperatur (Tcd) beträgt 180°C bis 205°C,
   (C) wenn die Erwärmungskristallisationstemperatur Tci ist, beträgt Tcd - Tci 5°C bis 30°C, und
   (D) die Halbwertszeit der Kristallisation $\tau$ bei 200°C beträgt 60 bis 90 Sekunden.

4. Polyester nach Anspruch 1, wobei der Antimonkatalysator ferner den folgenden Anforderungen genügt:

   (a) der Gehalt eines Pb-Elements beträgt 1 bis 100 ppm,
   (b) der Gehalt eines As-Elements beträgt 1 bis 100 ppm und
   (c) ein Fe-Element ist im wesentlichen nicht enthalten.

5. Fasern, erhältlich durch Schmelzspinnen des Polyesters nach Anspruch 1.

6. Fasern nach Anspruch 5, wobei die Beziehung zwischen der Schrumpfung bei siedendem Wasser (BWS) und der Doppelbrechung ($\Delta$n) der folgenden Formel

   (1) genügt:

7. Verfahren zur Herstellung eines Polyesters durch Unterziehen einer Dicarbonsäure oder eines Ester-bildenden Derivats davon und eines Diols oder eines Ester-bildenden Derivats davon einer Veresterungsreaktion oder einer Umesterungsreaktion, und anschließend Durchführen einer Polykondensationsreaktion in Gegenwart eines Antimonkatalysators, wobei der Antimonkatalysator:

   (i) Diantimontrioxid und
   (ii) 1 bis 10 Gew.-% Diaritimontetraoxid und/oder Diantimonpentaoxid, bezogen auf Diantimontrioxid, umfaßt.

8. Verfahren nach Anspruch 7, wobei die Polykondensationsreaktion in Gegenwart von 0,01 bis 0,1 Gew.-% eines Antimonkatalysators, bezogen auf das Gewicht des zu erhaltenden Polyesters, durchgeführt wird.

9. Verfahren nach Anspruch 7, wobei der Antimonkatalysator den folgenden Anforderungen genügt:

   (a) der Gehalt eines Pb-Elements beträgt 1 bis 100 ppm,
   (b) der Gehalt eines As-Element beträgt 1 bis 100 ppm und
   (c) ein Fe-Element ist im wesentlichen nicht enthalten.

10. Katalysator zur Polymerisation eines Polyesters, umfassend:

    (i) Diantimontrioxid und
    (ii) 1 bis 10 Gew.-% Diantimontetraoxid und/oder Diantimonpentaoxid, bezogen auf Diantimontrioxid.

11. Katalysator nach Anspruch 10, welcher ferner den folgenden Anforderungen genügt:

(a) der Gehalt eines Pb-Elements beträgt 1 bis 100 ppm,
(b) der Gehalt eines As-Elements beträgt 1 bis 100 ppm und
(c) ein Fe-Element ist im wesentlichen nicht enthalten.

**Revendications**

1. Polyester pouvant être obtenu en présence d'un catalyseur à base d'antimoine, où le catalyseur à base d'antimoine comprend :

   (i) du trioxyde de diantimoine, et
   (ii) entre 1 et 10 % en poids de tétroxyde de diantimoine et/ou de pentoxyde de diantimoine, par rapport ou trioxyde de diantimoine.

2. Polyester selon la revendication 1, dans lequel la teneur en un composé de l'antimoine est comprise entre 0,01 et 0,1 % en poids.

3. Polyester selon la revendication 1, comprenant en tant que constituant principal un poly(téréphtalate d'éthylène) et satisfaisant aux conditions suivantes :

   (A) la quantité de diéthylèneglycol copolymérisé est comprise entre 0,6 et 1,4 % en poids, par rapport au poids total du polyester,
   (B) la température de cristallisation par refroidissement (Tcd) est comprise entre 180 et 205°C,
   (C) si l'on appelle Tci la température de cristallisation par chauffage, Tcd - Tci est compris entre 5 et 30°C, et
   (D) le demi-temps de cristallisation τ à 200°C est compris entre 60 et 90 secondes.

4. Polyester selon la revendication 1, dans lequel le catalyseur à base d'antimoine satisfait en outre aux conditions suivantes :

   (a) la teneur en l'élément Pb est comprise entre 1 et 100 ppm,
   (b) la teneur en l'élément As est comprise entre 1 et 100 ppm, et
   (c) l'élément Fe est pour ainsi dire absent.

5. Fibres pouvant être obtenues par filage par fusion du polyester de la revendication 1.

6. Fibres selon la revendication 5, dans lesquelles la relation entre le retrait à l'ébullition (BWS) et la biréfringence (Δn) satisfait à la formule (1) suivante :

$$3\,000 \times \Delta n \leq BWS \leq 5\,000 \times \Delta n \qquad (1)$$

7. Procédé de production d'un polyester par soumission d'un acide dicarboxylique, ou d'un dérivé estérifiable de ce dernier, et d'un diol, ou d'un dérivé estérifiable de ce dernier, à une réaction d'estérification ou à une réaction de transestérification, puis par mise en oeuvre d'une réaction de polycondensation en présence d'un catalyseur à base d'antimoine, dans lequel le catalyseur à base d'antimoine comprend :

   (i) du trioxyde de diantimoine, et
   (ii) entre 1 et 10 % en poids de tétroxyde de diantimoine et/ou de pentoxyde de diantimoine, par rapport au trioxyde de diantimoine.

8. Procédé selon la revendication 7, dans lequel la réaction de polycondensation est mise en oeuvre en présence de 0,01 à 0,1 % en poids du catalyseur à base d'antimoine, par rapport au poids du polyester devant être obtenu.

9. Procédé selon la revendication 7, dans lequel le catalyseur à base d'antimoine satisfait aux conditions suivantes :

   (a) la teneur en l'élément Pb est comprise entre 1 et 100 ppm,

(b) la teneur en l'élément As est comprise entre 1 et 100 ppm, et
(c) l'élément Fe est pour ainsi dire absent.

**10.** Catalyseur pour la polymérisation d'un polyester, comprenant :

(i) du trioxyde de diantimoine, et
(ii) entre 1 et 10 % en poids de tétroxyde de diantimoine et/ou de pentoxyde de diantimoine, par rapport au trioxyde de diantimoine.

**11.** Catalyseur selon la revendication 10, satisfaisant en outre aux conditions suivantes :

(a) la teneur en l'élément Pb est comprise entre 1 et 100 ppm,
(b) la teneur en l'élément As est comprise entre 1 et 100 ppm, et
(c) l'élément Fe est pour ainsi dire absent.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001089935 A
- JP 11061568 A
- JP 11240944 A
- JP 2001271226 A
- JP 11279836 A
- JP 11247024 A